(19)

Europäisches Patentamt

European Patent Office

Office européen des brevets

(11) **EP 2 221 732 A1**

(12) **EUROPEAN PATENT APPLICATION**

(43) Date of publication:
**25.08.2010 Bulletin 2010/34**

(51) Int Cl.:
***G06F 17/15*** *(2006.01)*

(21) Application number: **09250473.7**

(22) Date of filing: **23.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicants:
• **Mitsubishi Electric R&D Centre Europe B.V. Guildford**
**Surrey GU2 7YD (GB)**
Designated Contracting States:
**GB**
• **Mitsubishi Electric Corporation Chiyoda-ku**
**Tokyo 100-8310 (JP)**
Designated Contracting States:
**AT BE BG CH CY CZ DE DK EE ES FI FR GR HR HU IE IS IT LI LT LU LV MC MK MT NL NO PL PT RO SE SI SK TR**

(72) Inventor: **Szajnowski, Wieslaw Jerzy**
**Guildford, Surrey GU1 2AR (GB)**

(74) Representative: **Brinck, David John Borchardt et al**
**R.G.C. Jenkins & Co**
**26 Caxton Street**
**London SW1H 0RJ (GB)**

(54) **Signal processing**

(57)     A method of deriving a representation of a first signal involves (a) deriving a second signal which is a version of the first signal having one or more frequency components each being shifted in phase with respect to a corresponding component of the first signal by the same predetermined, non-zero phase amount; (b) using zero-crossings of one of the first and second signals to determine sampling instants at which the other of the first and second signals is sampled; (c) combining the samples to obtain a combined value; and (d) repeating steps (b) and (c) with different time-shifts between the first and second signals, whereby the combined values for the different time-shifts collectively form a representation of the first signal.

FIG. 7

**Description**

BACKGROUND OF THE INVENTION

**Field of the Invention**

This invention relates to a method and apparatus for signal processing, and particularly for deriving a representation of a signal. The invention can be used for time-domain representation of non-deterministic processes as complex functions of relative time. The disclosed representation is particularly, but not exclusively, applicable to analysis of 'random' vibrations, e.g., for the purpose of early detection and diagnosis of faults in rotating machinery, such as geared transmission systems.

**Description of the Prior Art**

Physical phenomena of interest in science and engineering are usually observed and interpreted in terms of amplitude-versus-time functions, referred to as signals or waveforms. The instantaneous value of the function, the amplitude, may represent some physical quantity of interest (an observable), such as displacement, velocity, pressure, temperature etc.

Many physical phenomena are of a non-deterministic nature, i.e. each experiment produces a unique time series which is not likely to be repeated exactly and thus cannot be accurately predicted. An important class of time series, stationary time series, exhibit statistical properties which are invariant throughout time, so that the statistical behaviour during one epoch is the same as it would be during any other.

There are two distinct, yet broadly equivalent, approaches to time series representation and analysis: time-domain methods and frequency-domain (or spectral) methods. Conventional time-domain methods utilize the concept of the correlation function of a time series to develop a wide range of techniques suitable for time-series modelling, classification, forecasting, etc.

Although many signals encountered in practical applications are clearly non-stationary, conventional time-domain signal processing techniques exploiting correlation are based on the implicit assumption that the signals of interest are stationary. Moreover, signals generated by physical systems often exhibit different statistical properties in the forward and backward directions of time. Unfortunately, the symmetry inherent in the definition of the correlation function makes it insensitive to the time direction.

As will be described in further detail below, an application in which a complex representation of non-deterministic signals is extremely useful is that of early detection and diagnosis of faults in rotating machinery, such as geared transmission systems.

A vibration sensor, or a plurality of such sensors, may be suitably placed on the system housing to sense the transmission vibrations. When the system is operating in its intended regime, the sensed vibrations will exhibit some nominal time characteristics. However, when the operating conditions change (e.g., due to a fatigue crack), the observed vibration characteristics will change as well. Accordingly, timely detection of such a change can be utilized by a suitable control unit to alert the operator and/or make appropriate adjustments.

In the above and other applications, the sensors are responsive to an observed physical phenomenon that varies in time in a noise-like or chaotic fashion, and signals supplied by the sensors are representations of that phenomenon.

A novel time-domain technique, referred to as crosslation, has been disclosed in a number of patents and patent applications. For example, U.S. Pat. No. 6,539,320 discloses a robust method for determining the delay between two signals, in this case a primary reference signal and its time-delayed replica. The contents of U.S. Pat. No. 6,539,320 are incorporated herein by reference. In the following, the disclosed method will be referred to as "crosslation", and a system implementing the method will be referred to as a "crosslator". A crosslation technique involves using events (such as zero crossings) from one signal to sample the other signal. The events occur at irregular intervals, and are preferably at least substantially aperiodic. The samples are combined (e.g. by summing or averaging) to derive a value which represents the extent to which the sampling coincides with features of the second signal corresponding to the events. By repeating this for different delays between the first and second signals, it is possible to determine the delay which gives rise to the value representing the greatest coincidence of events, i.e. the delay between the two signals.

In the example described in the above disclosure, a nondeterministic signal x(t) is subjected to an unknown delay to produce a signal y(t), and a reference version of the signal x(t) is examined to determine the time instants at which its level crosses zero, either with a positive slope (an *upcrossing*) or with a negative slope (a *downcrossing*). The time instants of these crossing events are used to obtain and align respective segments of the signal y(t), the segments having a predetermined duration. The segments corresponding to zero upcrossings are all summed, and the segments corresponding to zero downcrossings are all subtracted from the resulting sum. A representation of such segment combination is then examined to locate a feature in the form of an S-shaped odd function of relative time. In the following, the S-shaped odd function will be referred to as the *"crosslation function"*. The position within the representation of a zero-crossing in the centre of the crosslation function represents the amount of the mutual delay between the two signals being processed.

As disclosed in EP-A-1378854, it is also possible to feed the same signal into both inputs of a crosslator, so that events (such as zero-crossings) in the signal are used to obtain successive segments of the same signal which are then averaged. The resulting crosslation function and/or changes in the shape of the crosslation function can be exploited to obtain useful information about the input signal.

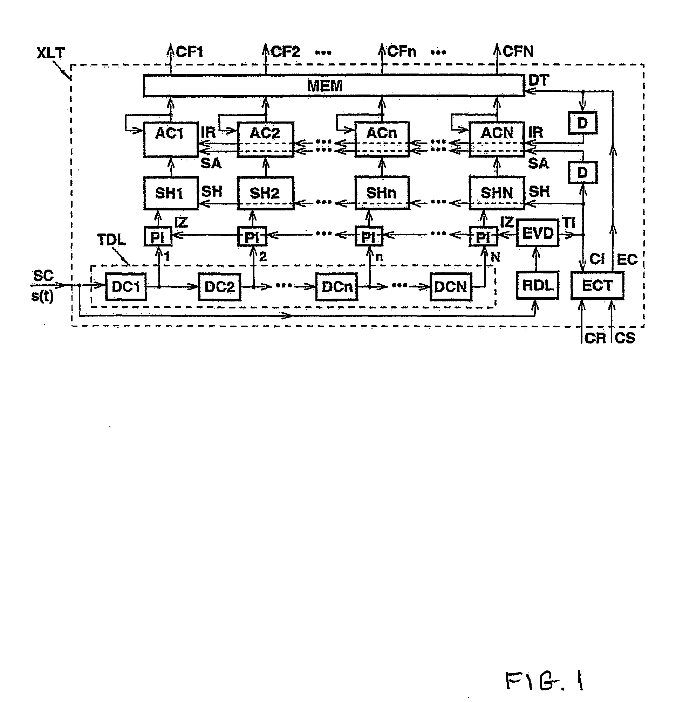

A functional block diagram of a crosslator system XLT is shown in Fig. 1. The system comprises a cascade of N delay cells, DC1, ..., DCn, ..., DCN, forming a tapped delay line TDL, an array of identical polarity-reversal circuits PI, a plurality of sample-and-hold circuits, SH1, ..., SHn, ..., SHN, a plurality of accumulators AC1,..., ACn, ..., ACN, a memory MEM, a constant delay line RDL, an event detector EVD, an event counter ECT, and two auxiliary delay units D.

Each of N taps of the delay line TDL provides a time-delayed replica of the analyzed signal s(t) applied to input SC. At any time instant, the values observed at the N taps of the line TDL form jointly a representation of a finite segment of the input signal s(t) propagating along the TDL. Preferably, the relative delay between consecutive taps of the line TDL has a constant value.

In a parallel signal path, the input signal s(t) is delayed in the constant delay line RDL by a time amount equal approximately to a half of the total delay introduced by tapped delay line TDL. The output of the delay line RDL drives the event detector EVD.

When the event detector EVD detects a zero crossing in the delayed signal s(t), a short trigger pulse TI is produced at output TI, and output IZ supplies a signal indicating the type (up or down) of a detected zero crossing.

Each circuit PI of the array of identical polarity-reversal circuits is driven by a respective tap of the delay line TDL and supplies a signal to a corresponding sample-and-hold circuit. In response to a signal at control input IZ, each circuit PI either passes its input signal with a reversed polarity (when a zero downcrossing is detected), or passes its input signal in its original form (when a zero upcrossing is detected).

The short trigger pulse TI generated by the event detector EVD is used to initiate, via the common input SH, a simultaneous operation of all sample-and-hold circuits, SH1, ..., SHn, ..., SHN. Each sample-and-hold circuit SHn captures the instantaneous value of the signal appearing at its input; this value is then acquired by a respective accumulator ACn at the time instant determined by a delayed trigger pulse TI applied to the common input SA. The trigger pulse TI also increments by one via input CI the current state of an event counter ECT.

The capacity of the event counter ECT is equal to a predetermined number of zero crossings to be detected in the input signal s(t). Accordingly, the time interval needed to detect the predetermined number of zero crossings will determine the duration of one complete cycle of operation of the crosslator system.

The capacity of the event counter ECT can be set to a required value by applying a suitable external control signal to input CS. Additionally, the state of the event counter ECT can be reset, via input CR, to an initial 'zero state'; this 'zero state' will also reset to zero all the accumulators. The event counter ECT can be alternatively arranged to operate continually in a 'free-running' fashion.

A trigger pulse TI delayed in the delay unit D initiates, via common input SA, the simultaneous operation of all accumulators driven by respective sample-and-hold circuits. The function of each accumulator ACn is to perform addition of signal values appearing successively at its input during each full operation cycle of the crosslator system. As explained below, all the accumulators are reset to zero, via common input IR, before the start of each new cycle of operation.

When a predetermined number of zero crossings has been detected by the event detector EVD, and registered by the event counter ECT, an end-of-cycle pulse EC is produced at the output of the counter ECT. This pulse initiates, via input DT, the transfer of the accumulators' data to the memory MEM. As a result, a discrete-time version of the determined crosslation function C(τ) will appear at the N outputs, CF1,..., CFn, ..., CFN of the memory MEM.

An end-of-cycle pulse EC, suitably delayed in the delay unit D, is used to reset to zero, via common input IR, all the accumulators. Also, when operating in a 'free-running' mode, the event counter ECT after reaching its maximum value will revert to its initial 'zero state'. At this stage, the crosslator system XLT, having completed its full cycle of operation, is ready to start a new cycle. It should be pointed out that the operation of the crosslator XLT can be terminated and re-started at any time by applying a suitable control signal to input CR of the event counter ECT.

Fig. 2 (in which reference symbols corresponding to those in Fig. 1 represent like components) shows a block diagram of a modified crosslator system in which the event detector EVD is driven by a signal supplied by a central tap n of the tapped delay line TDL. Therefore, the constant delay line RDL used in the system shown in Fig. 1 is no longer needed.

Fig. 3a is an example of an overlay of time-aligned segments s$\ell$(τ) of random vibrations s(t), and Fig. 3b depicts the crosslation function C(τ) obtained by combining the segments to represent the observed vibrations.

It would be desirable to provide a time-domain method for improved representation of statistical properties of observed signals, especially non-deterministic signals of non-stationary and time irreversible nature.

SUMMARY OF THE TNVENTION

Aspects of the present invention are set out in the accompanying claims.

In a further, alternative, aspect, a representation of a signal is obtained by sampling the signal at instants determined by events (such as zero-crossings) in a phase-shifted (preferably quadrature) version of the signal, and preferably repeating the operation with different delays of the phase-shifted signal relative to the sampled signal. In order to render the following description more compact, this processing will be referred to below as 'wavecore processing', and the resulting representation will be referred to as a 'wavecore function'.

Preferably the phase-shifted signal has one or more frequency components which are all phase-shifted by substantially the same non-zero phase amount with respect to the corresponding components in the sampled signal. (The phase-shifted signal should not be simply an inverted version of the sampled signal, and accordingly references to a non-zero phase amount are intended herein to mean a phase amount θ, where θ MOD 180° <> 0. This assumes a zero group-delay between the signals.)

The crosslation function described above contains information generally associated with timing, or phase, relationships between different segments of the same signal. However, using the techniques of the present invention, it would be possible to develop a complementary representation (a "wavecore representation") giving further information about the signal. The representation is preferably formed such that it exhibits a pronounced peak proportional to the energy (or power) of the signal. This can be exploited to facilitate signal detection, for example. Preferably, the location of such a wavecore representation peak should coincide in time with the location of the zero upcrossing of the central part of a crosslation function of the signal.

It will be appreciated that a representation in accordance with the invention can be obtained using a crosslator as described above, together with an arrangement for obtaining the appropriate phase-shifted relationship between the sampling signal and the signal being sampled.

It is known that a broad class of physical signals can be represented by the following band-pass model

$$s(t) = A(t) \cos[2\pi f_c t + \theta(t)]$$

where $f_c$ is the centre frequency, $A(t)$ is a time-varying amplitude and $\theta(t)$ is a time-varying phase (including time-varying frequency). The rate of change of both the *amplitude-modulation* component $A(t)$ and the *phase-modulation* component $\theta(t)$ is assumed to be slow with respect to that of the wave $\cos(2\pi f_c t)$.

A primary band-pass signal $s(t)$ can be used to obtain a corresponding quadrature signal of the form

$$q(t) = A(t) \sin[2\pi f_c t + \theta(t)]$$

As a result, within each frequency band, zero upcrossings and zero downcrossings of the signal $q(t)$ will substantially coincide in time, respectively, with maxima and minima of the primary signal $s(t)$.

In the preferred embodiments of the present invention, the phase shift between the frequency components of the sampled signal and those of the sampling signal is 90°, i.e. the signals have a quadrature relationship, whereby, for each frequency component, the sampling instants defined by zero-crossings of the phase-shifted signal coincide with minima and/or maxima of the sampled signal. This has been found to give especially useful results. However it would be possible to use any other non-zero phase shift to obtain information different from that which would be provided by a crosslation function alone.

It is known from the prior art that a signal $s(t)$ and its quadrature version $q(t)$ can be obtained by employing one of the following techniques:

    1. applying a primary input signal to a so-called (hardware) quadrature splitter to derive signals $s(t)$ and $q(t)$;

    2. utilizing a primary input signal to drive in parallel two mixers with their respective local oscillators shifted in phase by $\pi/2$ to derive signals $s(t)$ and $q(t)$;

    3. using a hardware or software form of a Hilbert transformer to derive the quadrature signal $q(t)$ from the signal $s(t)$. This procedure is preferred if the signal has a relatively large bandwidth, as it will result in a phase-shift for the different frequency components which is more uniform. (It should be pointed out that the method actually used to implement the Hilbert transform is only of secondary importance.)

    Any of these techniques can be used to derive a signal representation (which can be regarded as a representation of both $s(t)$ and $q(t)$, as well as the primary input signal where this differs from $s(t)$ and $q(t)$).

A wavecore function derived as described herein can, in general, be used in place of crosslation functions of prior art arrangements. However, in a preferred embodiment of the invention, the analysis of the signal involves deriving both the crosslation function and, using the techniques described above, the wavecore function. These two functions collectively provide valuable information which can be used to classify and/or monitor the signal of interest. In some embodiments there is derived a complex function including real and imaginary components formed, respectively, by the crosslation and wavecore functions (or *vice versa*).

The present invention is especially useful when applied to a signal of a general appearance of a meander (serpentine) form, such as a sinusoidal waveform, with time-varying cycle and/or time-varying amplitude. A zero-mean signal of this type will exhibit alternating distinct maxima and distinct minima of opposite sign, and the difference between the total number of zero crossings and that of observed extremal values will not exceed one.

One important example of a signal belonging to the above class is a 'chirp', i.e., a sinusoidal signal whose frequency is swept in a linear or nonlinear fashion. The amplitude of the signal may be constant or it may also vary in time. Although the total frequency span resulting from the applied sweep can be very large, the 'short-term bandwidth' of such a signal remains relatively narrow.

When a signal of interest is wideband but stationary in nature, it will still be possible to obtain a number of relatively narrowband components of that signal by employing a bank of suitably chosen band-pass filters. The obtained components will collectively encapsulate all important properties of the underlying wideband signal. Preferably, each filter of the bank will have the same fractional bandwidth, i.e., the ratio of the bandwidth to the centre frequency. As a result, the original wide frequency band will be covered by the individual filter characteristics in a logarithmic fashion. Properties of such filters, often referred to as 'constant-Q filters', are well known to those skilled in the art. Embodiments of the invention may exploit this technique by using a bank of filters to split a basic input signal, and then, for each frequency band, deriving a representation using the techniques of the invention.

BRIEF DESCRIPTION OF THE DRAWINGS

Arrangements embodying the invention will now be described by way of example with reference to the accompanying drawings, throughout which like reference symbols represent like elements, and in which:

Fig. 1 is a block diagram of a known crosslator;

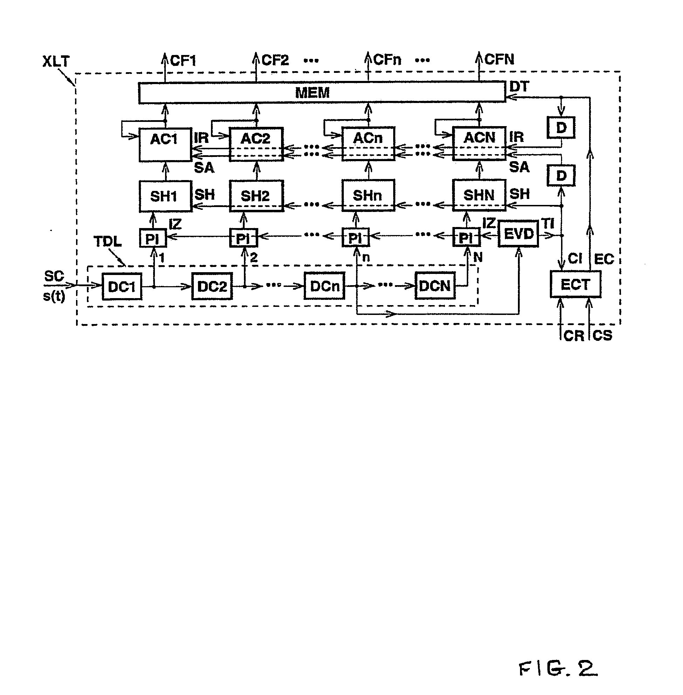

Fig. 2 is a block diagram of a modified version of the crosslator of Fig. 1;

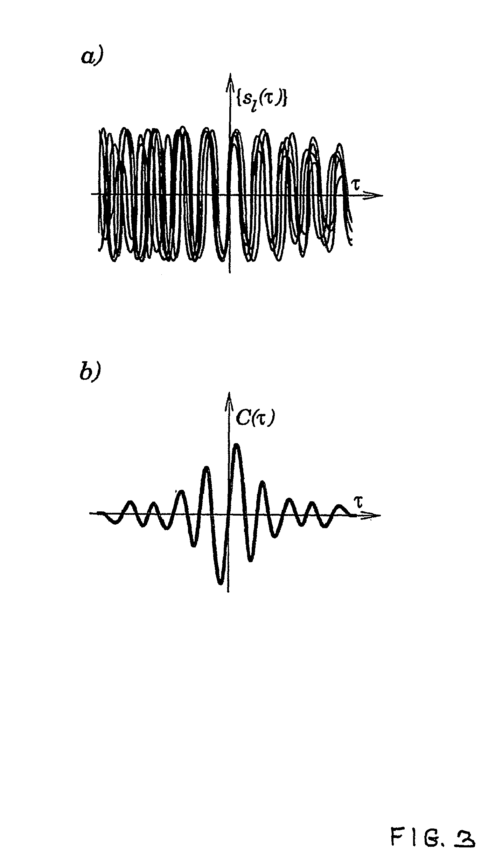

Fig. 3a shows an example of overlaying sampled segments of an input signal, and
Fig. 3b shows the crosslation function obtained by summing those segments;

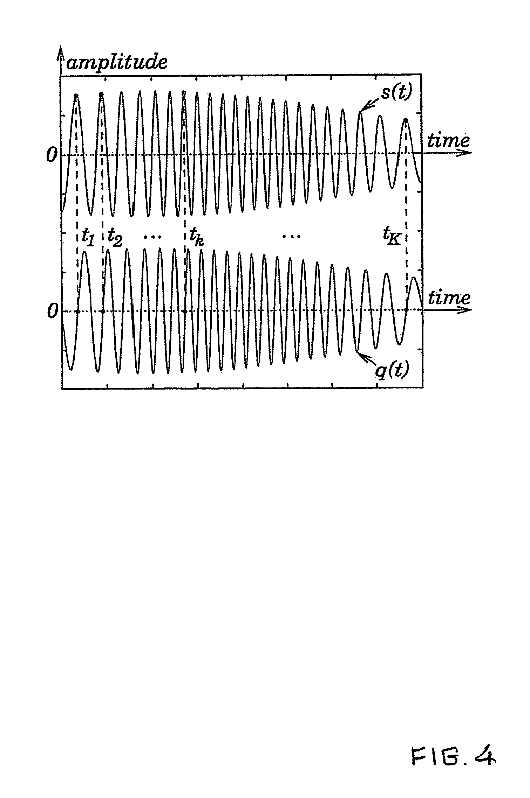

Fig. 4 shows a signal to be processed according to the present invention and its quadrature version;

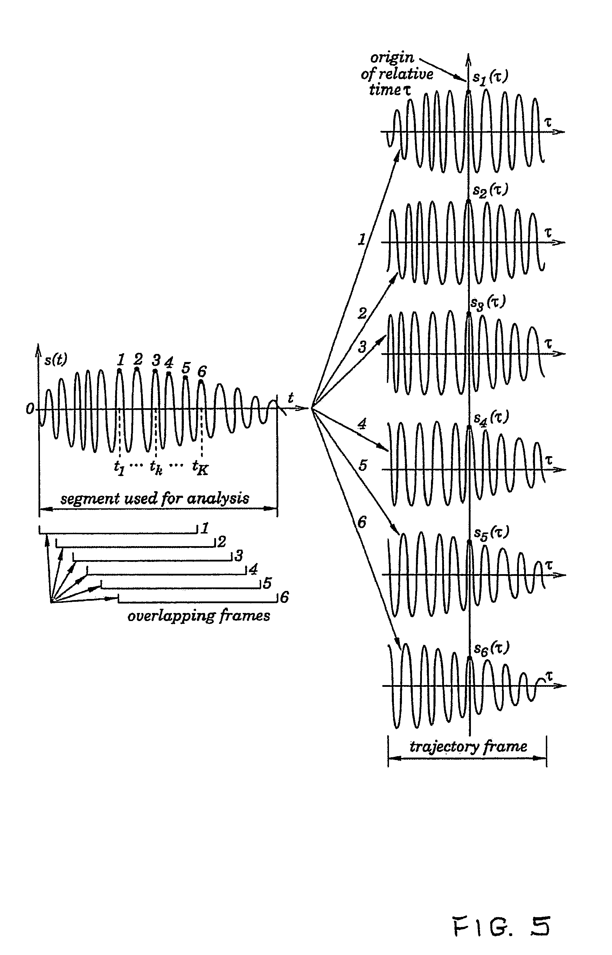

Fig. 5 illustrates how segments of the signal of Fig. 4 are obtained;

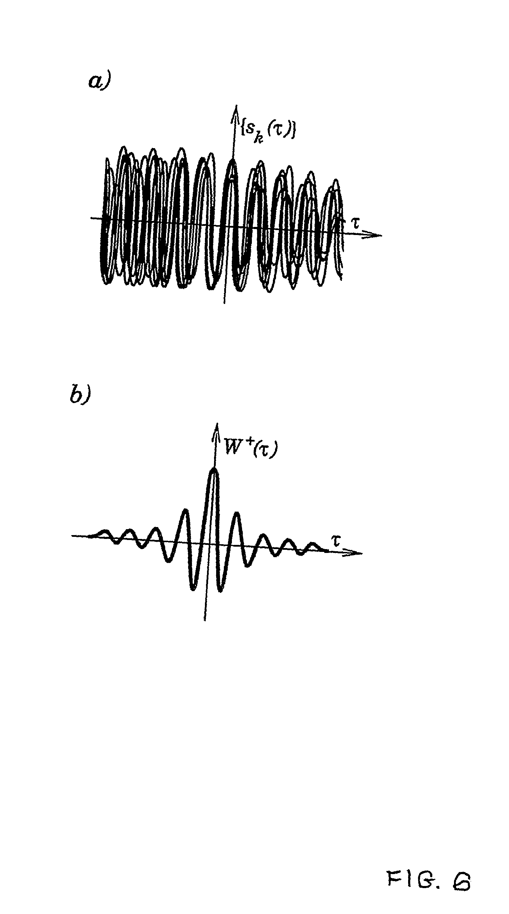

Fig. 6a shows the overlayed segments of Fig. 5 and Fig. 6b shows the wavecore function obtained by summing those segments;

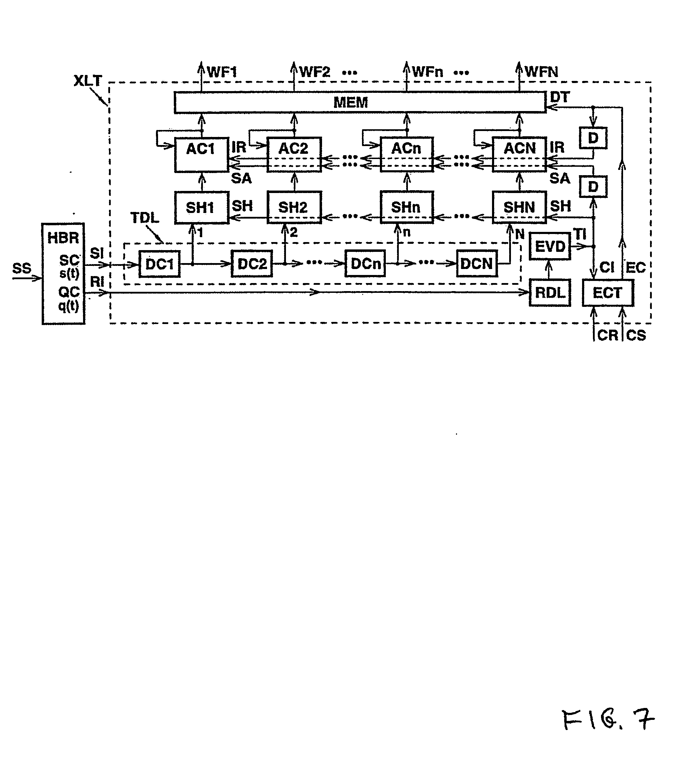

Fig. 7 is a block diagram of a wavecore processor according to the present invention;

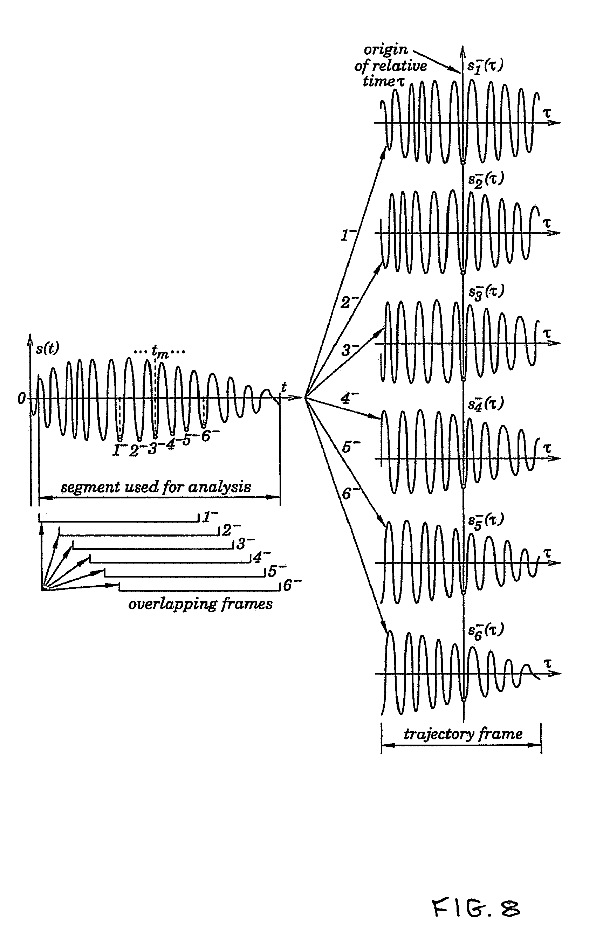

Fig. 8 is a view similar to that of Fig. 5, but showing segments obtained by sampling at the time of minima (rather than maxima) in the sampled signal;

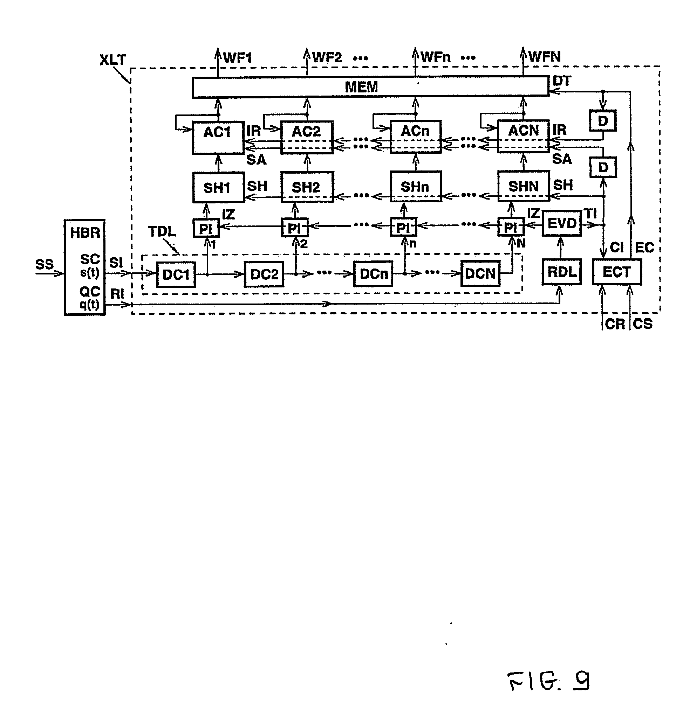

Fig. 9 is a block diagram of another wavecore processor according to the present invention;

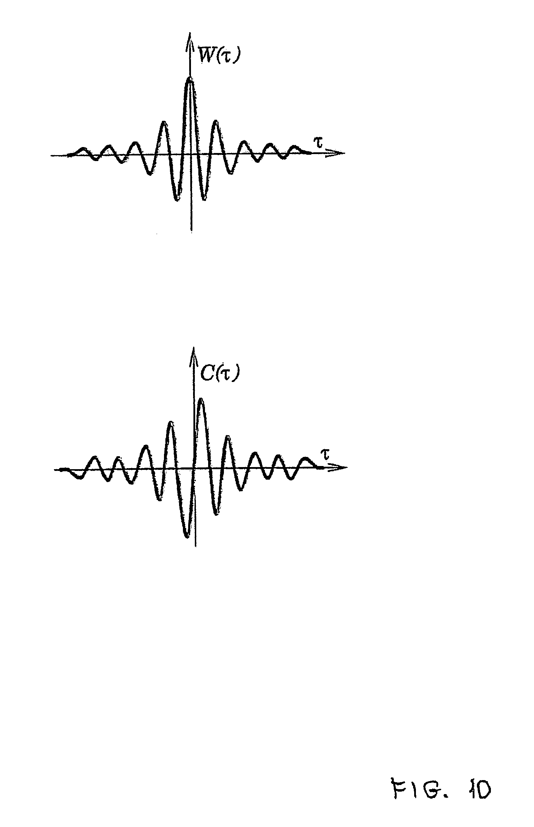

Fig. 10 shows an average wavecore function and an average crosslation function of the same signal;

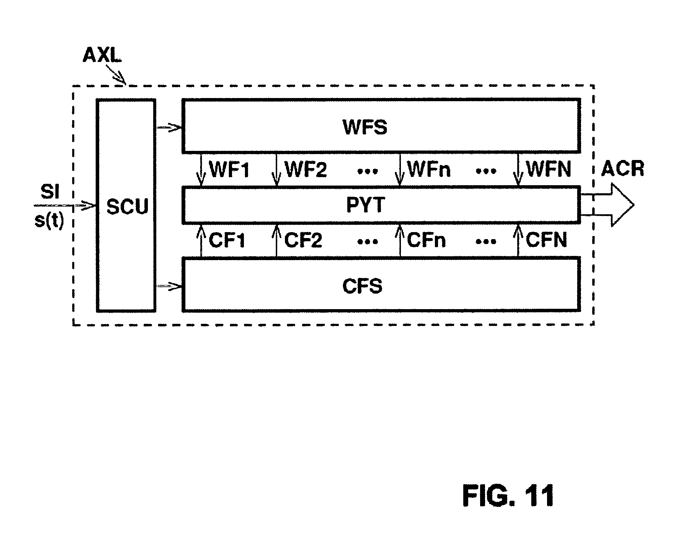

Fig. 11 shows another signal processor according to the invention, the processor including an analytic crosslator;

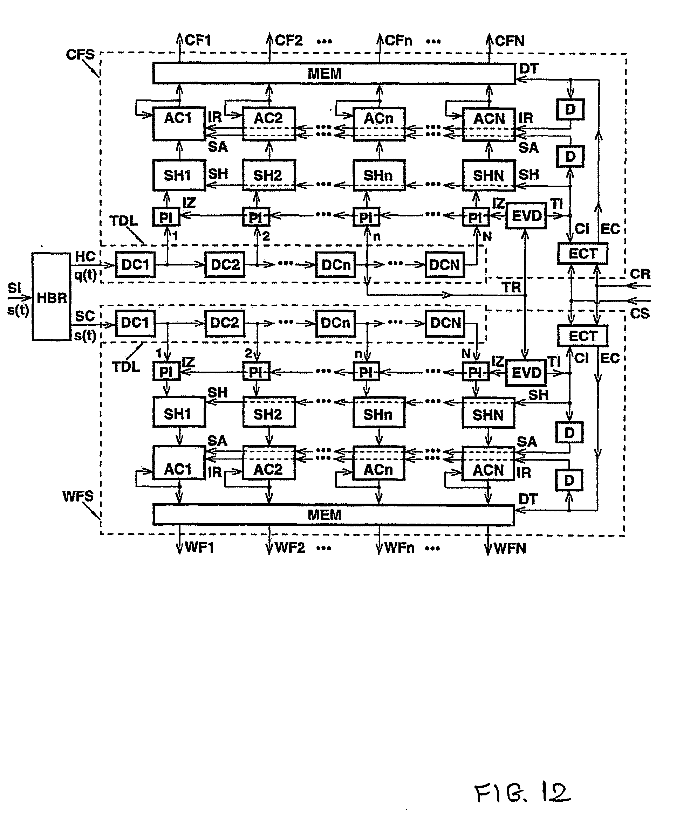

Fig. 12 is detailed block diagram of an analytic crosslator in accordance with the invention;

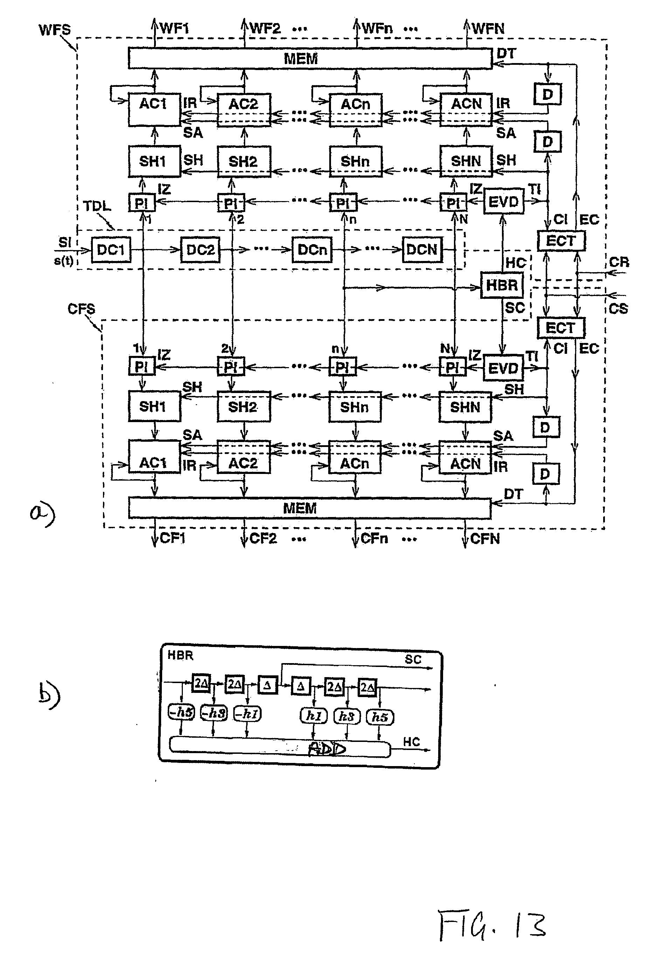

Fig. 13a is detailed block diagram of a different analytic crosslator in accordance with the invention, and Fig. 13b is a diagram of a Hilbert transformer which could form part of the crosslator of Fig. 13a;

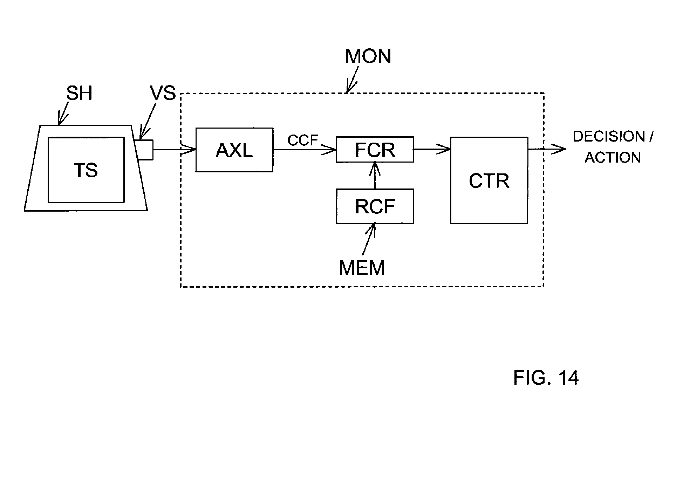

Fig. 14 is a block diagram of a monitoring apparatus according to the present invention;

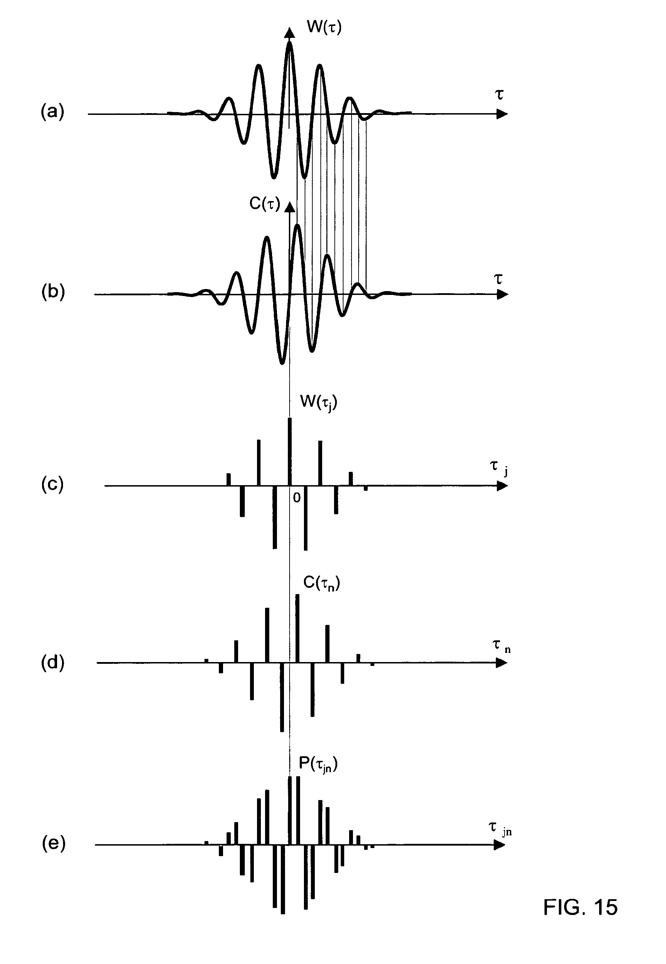

Fig. 15 illustrates procedures employed to determine crosslation and wavecore fringe patterns, and also a combination of these two patterns;

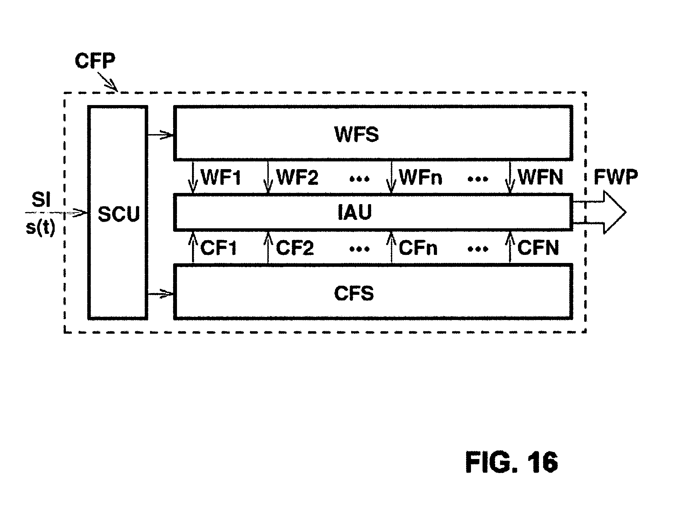

Fig. 16 shows a further signal processor according to the invention, this processor also including an analytic crosslator; and

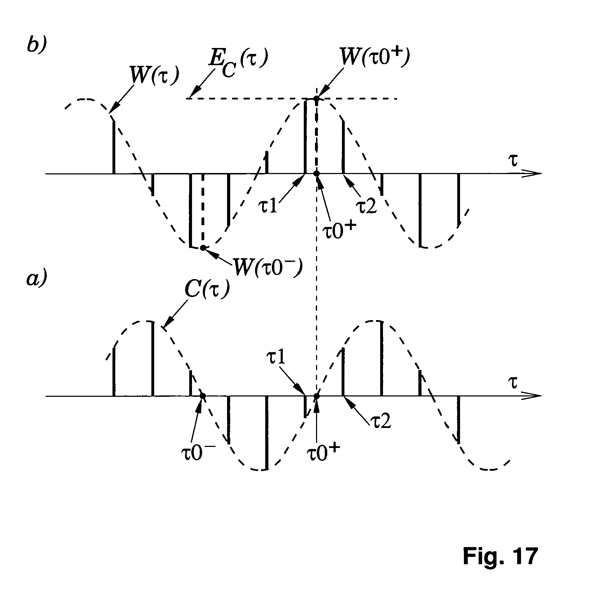

Fig. 17 depicts schematically the interpolation operations performed by a block of the signal processor of Fig. 16.

DETAILED DESCRIPTION OF THE PREFERRED EMBODIMENTS

Fig. 4 shows an example of a primary band-pass signal s(t) and a corresponding quadrature signal q(t). For example, a primary signal s(t) may represent random vibrations, or a carrier wave $\cos(2\pi f_c t)$ with a centre frequency $f_c$ and its amplitude and/or phase modulated by a deterministic or non-deterministic (e.g., random or chaotic) process. Alternatively, a primary signal s(t) may represent the response of a band-pass filter excited by a wideband deterministic or non-deterministic waveform.

There are time instants at which the quadrature signal q(t) crosses the zero level with a positive slope. Those time instants

$$t_1, t_2, \dots, t_k, \dots, t_K$$

form a set of *zero upcrossings*; for illustrative purposes, selected zero upcrossings of q(t) and corresponding maxima of s(t) are marked with dots in Fig. 4.

From the basic relationship between a signal and its quadrature version it follows that zero upcrossings of the quadrature signal q(t) will always substantially coincide in time with local maxima of the primary signal s(t). Similarly, zero downcrossings of q(t) and local minima of s(t) will also substantially coincide in time.

Suppose that any one of zero upcrossings of q(t), say that at $t_k$, has been selected. Consider now the primary signal s(t), depicted for reference in Fig. 5, before and after its local maximum, $s(t_k)$, occurring at this selected time instant $t_k$. For the purpose of this analysis, it is convenient to introduce the notion of signal *trajectory*, associated with a local maximum of the signal. For a maximum occurring at $t_k$, the signal trajectory $s_k(\tau)$ is determined from

$$s_k(\tau) = s(t_k + \tau); \qquad\qquad k = 1, 2, \dots K$$

where $\tau$ is (positive or negative) *relative time.* Accordingly, each trajectory $s_k(\tau)$ is simply a time-shifted copy of the primary signal s(t). The time shift, different for each trajectory, results from the time transformation

$$\tau = t - t_k; \qquad\qquad k = 1, 2, \dots K,$$

used for transporting signal trajectories from the time domain (t) to the tau-domain ($\tau$).

Accordingly, a single primary signal s(t) can generate successively a plurality of trajectories $\{s(t_k + \tau); k = 1, 2, \dots K\}$ that are mapped (by the time shifts) into another set of trajectories $\{s_k(\tau); k = 1, 2, \dots K\}$, each being a function of relative time $\tau$ in the tau-domain. Such construction makes all local maxima of a primary signal s(t) equivalent in the sense that they, being aligned in time, jointly define the same origin $\tau = 0$ of the relative time $\tau$.

Fig. 5 illustrates schematically the mechanism of using a segment of a primary signal s(t) to construct a number of trajectories associated with maxima of that signal. The duration of each trajectory used for further processing is determined by a preselected *trajectory frame.* In addition, within this frame, a specific location is selected (e.g., somewhere close to the middle) to become the origin of the relative time $\tau$.

In the example shown in Fig. 5, the signal segment has six maxima, K = 6, which are marked by dots and numbered accordingly. Each signal trajectory, $s_k(\tau)$, corresponding to a respective maximum at t = $t_k$, is constructed in a similar manner. For example, trajectory $s_1(\tau)$ is obtained by applying a two-step procedure:

> 1. select maximum 1 and make a copy of the primary signal s(t); in general, the duration of the copy centred around the maximum at t = $t_1$ will not exceed the doubled frame duration;
> 2. position the copy obtained in step 1 within the trajectory frame so as to align the timing of maximum 1 with the relative time origin, $\tau = 0$.

As a result, the origin of the relative time $\tau$ will coincide with the time instant $\tau$ at which maximum 1 occurs in the primary signal s(t).

When the above procedure has been replicated for each of the six maxima, the trajectory frame in the tau-domain will have contained all six signal trajectories, and the positions of the corresponding maxima will have coincided with the relative time origin, $\tau = 0$. For illustrative purposes, Fig. 6a depicts an overlay of time-aligned trajectories in the tau-domain.

K signal trajectories $\{s(t_k + \tau), k = 1, 2, \dots, K\}$, associated with local maxima $\{s(t_k)\}$ of a primary signal s(t), are used to determine a *wavecore function* $W^+(\tau)$, defined by

$$W^+(\tau) = \frac{1}{K}\sum_{k=1}^{K} s(t_k + \tau) = \frac{1}{K}\sum_{k=1}^{K} s_k(\tau)$$

The wavecore function $W^+(\tau)$ will always attain its maximum value at $\tau = 0$; however, for strictly periodic signals, the same maximum value may be observed at other non-zero values of the relative time $\tau$. In general, the shape of the wavecore function will contain information about the coherence of a signal under examination. For example, in the case of a band-pass noise process, the wavecore function will decay more rapidly for a process with a larger bandwidth. Moreover, the peak value will be proportional to the power of the signal being processed.

In many cases, the wavecore function can exhibit a shape quite similar to that of the autocorrelation function. However, in contrast to the autocorrelation function, the wavecore function may assume an asymmetric shape, thus improving signal classification and recognition.

It should be pointed out that in the case of processing signals with stationary (or cyclostationary) properties it is not necessary to use all consecutive maxima to determine the wavecore function. For example, when a relatively long record of a stationary random signal is available, it is possible to select maxima separated by at least some predetermined time interval. Such arrangement will be especially advantageous when implementing the disclosed method with the use of an integrating oscilloscope.

Fig. 6b is an example of a wavecore function $W^+(\tau)$ obtained by averaging a number of signal trajectories suitably aligned in the tau-domain.

The wavecore function can be determined for a band-pass signal of interest with the use of a basic prior-art crosslator system XLT in a system modified to derive a sampling signal q(t) whose frequency components are phase-shifted relative to the signal s(t) being sampled, as shown in Fig. 7. A signal s(t) under examination is applied to input SS of a quadrature splitter (e.g. a Hilbert transformer) HBR that produces at its outputs, SC and QC, respectively, a copy of the input signal s(t) and a quadrature version q(t) of that signal. Outputs, SC and QC, are connected, respectively, to a 'signal input' SI and a 'reference input' RI of the crosslator XLT. If there is a time delay between the two versions of the signal s(t) observed, respectively, at input SS and output SC, such a delay can be compensated by suitably adjusting the delay introduced by a constant delay line RDL.

The system comprises a cascade of N delay cells, DC1, ..., DCn, ..., DCN, forming a tapped delay line TDL, a plurality of sample-and-hold circuits, SH1, ..., SHn, ..., SHN, a plurality of accumulators AC1, ..., ACn, ..., ACN, a memory MEM, the constant delay line RDL, an event detector EVD, an event counter ECT, and two auxiliary delay units D.

In the configuration shown in Fig. 7, each of N taps of the delay line TDL provides a time-delayed replica of the input signal s(t). At any time instant, the values observed at the N taps of the line TDL form jointly a discrete-time representation of a finite segment of the input signal propagating along the line TDL. Preferably, the relative delay between consecutive taps of the line TDL has a constant value.

A quadrature version q(t) of an input signal s(t) is delayed in the constant delay line RDL by a time amount equal approximately to a half of the total delay introduced by the tapped delay line TDL.

When the event detector EVD detects a zero upcrossing in the delayed quadrature signal q(t), a short trigger pulse TI is generated to initiate, via the common input SH, a simultaneous operation of all sample-and-hold circuits, SH1, ..., SHn, ..., SHN. Each sample-and-hold circuit SHn captures the instantaneous value of the signal appearing at its input; this value is then acquired by a respective accumulator ACn at the time instant determined by a delayed trigger pulse TI applied to the common input SA. The trigger pulse TI also increments by one via input CI the current state of an event counter ECT.

The capacity of the event counter ECT is equal to a predetermined number of zero upcrossings, being the required number K of signal trajectories to be processed. Accordingly, the time interval needed to detect the predetermined number of zero upcrossings will determine the duration of one complete cycle of operation of the crosslator system.

The capacity of the event counter ECT can be set to a required value by applying a suitable external control signal to input CS. Additionally, the state of the event counter ECT can be reset, via input CR, to an initial 'zero state'; this 'zero state' will also reset to zero all the accumulators. The event counter ECT can be alternatively arranged to operate continually in a 'free-running' fashion.

A trigger pulse TI delayed in the delay unit D initiates, via common input SA, the simultaneous operation of all accumulators driven by respective sample-and-hold circuits. The function of each accumulator ACn is to perform addition of signal values appearing successively at its input during each full operation cycle of the crosslator system. As explained below, all the accumulators are reset to zero, via common input IR, before the start of each new cycle of operation.

When a predetermined number K of zero upcrossings has been detected by the event detector EVD, and registered by the event counter ECT, an end-of-cycle pulse EC is produced at the output of the counter ECT. This pulse initiates, via input DT, the transfer of the accumulators' data to the memory MEM. As a result, a discrete-time version of the determined wavecore function $W^+(\tau)$ will appear at the N outputs, WF1,..., WFn, ..., WFN of the memory MEM.

An end-of-cycle pulse EC, suitably delayed in the delay unit D, is used to reset to zero, via common input IR, all the accumulators. Also, when operating in a 'free-running' mode, the event counter ECT after reaching its maximum value (capacity) will revert to its initial 'zero state'. At this stage, the crosslator system XLT, having completed its full cycle of operation, is ready to start a new cycle. It should be pointed out that the operation of the crosslator XLT can be terminated and re-started at any time by applying a suitable control signal to input CR of the event counter ECT.

It is obvious that minima of a primary signal s(t) can also be utilized to construct a complementary wavecore function $W^-(\tau)$. Fig. 8 shows an example of a primary band-pass signal s(t) being sampled by zero downcrossings of a corresponding quadrature signal q(t). The time instants

$$t_1, t_2, \ldots, t_m, \ldots, t_M$$

of *zero downcrossings* of q(t) coincide with those of minima of s(t); those time instants are marked with circles.

Fig. 8 illustrates schematically the mechanism of using a segment of a primary signal s(t) to generate signal trajectories associated with minima of that signal. In the signal s(t), there are six minima, marked by circles and numbered, $1^-, 2^-, \ldots, 6^-$. Each signal trajectory, $s^-_m(\tau)$, m = 1, 2, ... , M, where M = 6, corresponds to a respective minimum occurring at $t = t_m$.

The complement $W^-(\tau)$ of the wavecore function $W^+(\tau)$ can be determined from

$$W^-(\tau) = \frac{1}{M}\sum_{m=1}^{M} s^-_m(\tau)$$

where $s^-_m(\tau)$, m = 1, 2, ... , M, are trajectories associated with minima of the primary signal s(t) being processed.

From the definition of the complementary wavecore function $W^-(\tau)$ it follows that the function $W^-(\tau)$ can alternatively be determined by utilizing the crosslator XLT of Fig. 7 when the event detector EVD detects *downcrossings* in the quadrature version q(t) of the input signal s(t).

The wavecore functions, $W^+(\tau)$ and $W^-(\tau)$, either separately, jointly or in some suitable combination, can provide, in a very compact form, information about the signal characteristics, especially its coherence. Therefore, the wavecore functions can be viewed as signal signatures or 'fingerprints', particularly well suited to the tasks of signal detection, classification and recognition.

In many practical applications, a wavecore function constructed in accordance with the invention can replace the standard autocorrelation function. However, the implementation of a wavecore function is much simpler than that of an autocorrelation function because it includes only the operations of shifting and summing with no multiplications required.

When the structural and statistical properties of a signal under examination are independent of signal polarity, or when it is convenient to do so, the two wavecore functions, $W^+(\tau)$ and $W^-(\tau)$, can be combined as follows

$$W(\tau) = [W^+(\tau) - W^-(\tau)]/2$$

The resulting *average wavecore function* $W(\tau)$ may be utilized as a 'wave-print' encapsulating in a condensed form information regarding coherence of the signal.

According to another aspect of the present invention, the average wavecore function $W(\tau)$ can be determined for a band-pass signal s(t) of interest with the use of the prior-art crosslator system XLT of Fig. 1, in a system modified to derive a phase-shifted sampling signal as shown in Fig. 9.

In this case, a signal s(t) under examination is applied to input SS of a quadrature splitter HBR that produces at its outputs SC and QC, respectively, a copy of the signal s(t) and a quadrature version q(t) of that signal. Outputs, SC and QC, are connected, respectively, to a 'signal input' SI and a 'reference input' RI of the crosslator XLT.

The crosslator system XLT of Fig. 9 comprises an event detector EVD with two outputs:

1. output TI, to produce a short trigger pulse in response to a detected zero upcrossing or downcrossing in the delayed quadrature signal q(t);
2. output IZ, to provide a signal indicating the type (up or down) of a detected crossing.

The system XLT also comprises an array of identical polarity-reversal circuits PI, and each circuit PI, being driven by a respective tap of the delay line TDL, supplies a signal to a corresponding sample-and-hold circuit. Each of the circuits PI has also a control input IZ and, depending on the state of input IZ, the circuit PI:

- passes its input signal with a reversed polarity, when a zero downcrossing is detected by the event detector EVD;
- passes its input signal in its original form, when a zero upcrossing is detected by the event detector EVD.

Accordingly, when a full cycle of operation of the system XLT has been completed, a representation of the average wavecore function $W(\tau)$ will appear at the N outputs, WF1,..., WFn, ..., WFN of the memory MEM.

In accordance with another aspect of the invention, for improved signal detection, classification and/or recognition, a wavecore function such as the average wavecore function $W(\tau)$ is utilized in conjunction with the crosslation function $C(\tau)$. For example they may be combined to form an *analytic crosslation function*

$$C_A(\tau) = W(\tau) + jC(\tau)$$

where $W(\tau)$ and $C(\tau)$ are, respectively, the real and imaginary part of the complex function $C_A(\tau)$, and $j^2 = -1$.

Fig. 10 depicts an example of an average wavecore function $W(\tau)$ along with a corresponding crosslation function $C(\tau)$. In practice, it may also be advantageous to determine the (analytic) crosslation envelope $E_C(\tau)$ and (analytic) crosslation phase $\Phi_C(\tau)$

$$E_C(\tau) \;=\; \sqrt{W^2(\tau) + C^2(\tau)} \qquad\qquad \Phi_C(\tau) \;=\; \arctan\frac{C(\tau)}{W(\tau)}$$

where the arctan function is a four-quadrant function (so that the individual signs of $C(\tau)$ and $W(\tau)$ are taken into account).

Fig. 11 is a block diagram of an analytic crosslator AXL constructed in accordance with the invention. The system comprises a signal conditioning unit SCU, a wavecore function subsystem WFS, a crosslation function subsystem CFS, and a Pythagoras processor PYT. The Pythagoras processor PYT receives at its inputs WF1, ..., WFn, ..., WFN and CF1, ..., CFn, ..., CFN, respectively, representations of wavecore and crosslation functions to convert them into a crosslation envelope and crosslation phase; those quantities are available at the output ACR of the analytic crosslator AXL.

The analytic crosslation function $C_A(\tau)$ forms a useful representation of the input signal and can be used to classify the signal or can be monitored to detect changes representing, for example, physical phenomena to be detected. The classification can be achieved by deriving parameters representing this function, e.g. the analytic crosslation envelope $E_C(\tau)$ and the analytic crosslation phase $\Phi_C(\tau)$, or more generally the value $\sqrt{[A^2(\tau) + B^2(\tau)]}$ and the ratio $A(\tau)/B(\tau)$, where $A(\tau)$ is one of the wavecore and crosslation representations and $B(\tau)$ is the other of the representations.

It is possible for a wavecore function such as the average wavecore function $W(\tau)$ to be combined in a different manner with a crosslation function $C(\tau)$. For example, it is possible to utilize both the functions $W(\tau)$ and $C(\tau)$ in order to construct a single *real* function that will retain (in some sense) some basic features of the *complex* analytic crosslation function $C_A(\tau)$. One such construction, in which events such as zero-crossings in one (or both) of the crosslation and wavecore functions is used to sample the other function, is described below.

For illustrative purposes, Fig. 15 shows the average wavecore function $W(\tau)$ at (a) and the crosslation function $C(\tau)$ at (b). The samples of the wavecore function corresponding to the zero-crossings in the crosslation function will form wavecore fringes $W(\tau_j)$ shown at (c). In a similar fashion, the samples of the crosslation function corresponding to the zero-crossings in the wavecore function will form crosslation fringes $C(\tau_n)$ shown at (d). The timings and amplitudes of the fringes correspond to the positive and negative peaks of the respective functions. These two patterns of fringes provide a useful representation of the input signal; such a representation can be exploited for classification or monitoring purposes.

Additionally, owing to the fact that zero crossings that occur, respectively, in the wavecore function and the crosslation function cannot coincide, it is possible to underline interleave the two fringe patterns. The resulting composite fringe pattern (a *fringe wave-print*) $P(\tau_{jn})$ is shown in Fig. 15 at (e). As seen, thus obtained fringe wave-print:

- provides very precise timing information;
- retains accurate crosslation envelope information;
- indicates the time direction owing to its inherent time asymmetry.

The two fringe patterns and the resulting fringe wave-print can be determined with the use of a crosslation fringe processor CFP constructed using an analytic crosslator and shown in block form in Fig. 16. Two fringe patterns and a fringe wave-print are available at the output FWP of the crosslation fringe processor CFP. In this arrangement, the Pythagoras processor PYT of Fig. 11 has been replaced by an interpolating arithmetic unit IAU.

For illustrative purposes, Fig. 17 depicts one example of the operations performed by the interpolating arithmetic unit IAU. In practice, zero crossings occurring in the relative-time domain $\tau$ are not observable due to the discrete nature of a tapped delay line used in crosslation processing. Hence, the timing of each such crossing must be determined by suitable interpolation.

In Fig. 17 a, the timing $\tau0^+$ of an 'implicit' zero upcrossing of the crosslation function $C(\tau)$ represented by discrete samples is determined by utilizing the two consecutive time instants, $\tau1$ and $\tau2$, at which the crosslation function $C(\tau)$ assumes, respectively, a negative and a positive value; i.e. $C(\tau1) < 0$ and $C(\tau2) > 0$.

The value of the corresponding wavecore function $W(\tau)$ at the time instant $\tau0^+$ can be determined from the values of $W(\tau)$ at times $\tau1$ and $\tau2$ using a linear-interpolation procedure. However, because the values $W(\tau1)$ and $W(\tau2)$ are on opposite sides of a peak value, a significant error will arise unless compensating measures are taken. Accordingly, in the preferred embodiment, the linear-interpolation procedure is instead applied to the crosslation envelope $E_C(\tau)$ observed at times $\tau1$ and $\tau2$, i.e. the values $E_C(\tau1)$ and $E_C(\tau2)$; accordingly, $W(\tau0^+) = E_C(\tau0^+)$. In the case of a zero downcrossing, determined in a similar manner at some $\tau0^-$, the corresponding value of the wavecore function will be determined as $W(\tau0^-) = -E_C(\tau0^-)$.

The described above operations performed by the interpolating arithmetic unit IAU can be implemented in many different ways (including a computer program) known to those skilled in the art.

The are presented below two basic configurations of a wavecore function subsystem WFS operating jointly with a crosslation function subsystem CFS; either of these configurations can be used to form the analytic crosslator AXL of Fig. 11 or the crosslation fringes processor CFP of Fig. 16.

Fig. 12 is a functional block diagram of a first preferred embodiment in which the crosslation function subsystem CFS and the wavecore function subsystem WFS are both similar to the processor of Fig. 9, and operate in the same way, except that the signals used for sampling are as set out below. The crosslation function subsystem CFS processes a quadrature component q(t) and generates a reference 'trigger' signal TR at tap n of the tapped delay line TDL. The signal TR is applied to respective event detectors EVD in both the subsystems, CFS and WFS. The wavecore function subsystem WFS processes an in-phase component s(t) supplied by the Hilbert transformer HBR. The obtained wavecore and crosslation functions can then be used by the analytic crosslator AXL of Fig. 11 and by the crosslation fringe processor CFP of Fig. 16.

Fig. 13a is a functional block diagram of a modified preferred embodiment in which only one tapped delay line TDL is used (by the wavecore function subsystem WFS), and a Hilbert transformer HBR is employed to provide two reference 'trigger' signals. A signal obtained at output HC is applied to the event detector EVD of subsystem WFS whereas a signal obtained at output SC drives the event detector EVD of subsystem CFS. The obtained wavecore and crosslation functions can then be used by the analytic crosslator AXL of Fig. 11 and by the crosslation fringe processor CFP of Fig. 16.

The Hilbert transformer HBR could have a structure as shown in Fig. 13b. The transformer comprises a tapped delay line which receives a suitably delayed version of the input signal s(t) and successively delays it by predetermined amounts $2\Delta, 2\Delta, \Delta, \Delta, 2\Delta, 2\Delta$. The differently-delayed signals are weighted and summed in an adder ADD, the output of which is the Hilbert transform of the input signal s(t) appearing at the centre tap of the delay line of the transformer. The weights {-h5, -h3,..., h5} are selected in accordance with the impulse response of a Hilbert Transformer, i.e., they are inversely proportional to the delay relative to the centre tap. The transformer HBR is in fact a transversal (FIR) filter with a linear phase. Therefore, it introduces a constant delay, but the locations of zero crossings are not otherwise perturbed. The Hilbert transform approximated by this arrangement is sufficient because it is utilized to determine only locations of zero crossings of the Hilbert component. The tapped delay line of the Hilbert transformer may form an integral part of the main tapped delay line TDL of Fig. 13a; for example, each unit delay $\Delta$ may be formed by a delay cell of the tapped delay line TDL.

It should be pointed out that although both the systems of Fig. 12 and Fig. 13 determine the wavecore function, the methods employed by the respective systems are substantially different. While the system of Fig. 12 uses a single sequence of zero crossings to sample two signals, (t) and q(t), the system of Fig. 13 uses two sequences of zero crossings to sample a single signal s(t) at alternating interleaved time instants.

The systems of Figs. 12 and 13a can be simplified by using the same components, such as polarity inverters and the block of sample/hold circuits, in both the crosslation function subsystem CFS and the wavecore function subsystem WFS, by operating the components in a multiplexed manner. Generally, the functions performed by the blocks in any of the above-described embodiments could be implemented in software.

One application in which a complex representation of non-deterministic signals is extremely useful is that of early detection and diagnosis of faults in rotating machinery, such as geared transmission systems.

A block diagram of a monitoring apparatus MON is depicted in Fig. 14. A vibration sensor, VS is placed on the system housing SH to sense the transmission vibrations. When the transmission system TS is operating in its intended regime, the sensed vibrations will exhibit some nominal time characteristics. Accordingly, the observed complex analytic crosslation function CCF produced by an analytic crosslator AXL will match one of the reference crosslation functions RCF stored in a memory MEM. However, when the operating conditions change (e.g., due to a fatigue crack), the observed vibration characteristics will change as well. As a result, there will be a noticeable discrepancy between the observed analytic crosslation function CCF and each of the reference crosslation functions RCF. Accordingly, the function comparator FCR will declare fault detection, and it also may indicate the type of the fault. This information can be utilized by a suitable control unit CTR to alert the operator and/or make appropriate adjustments.

In the above arrangement, in order to simplify the monitoring apparatus MON, the analytic crosslator AXL can be replaced by a suitably configured crosslation fringe processor CFP of Fig. 16.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

For example, in various embodiments described above, it is possible to sample in response only to upcrossings or only in response to downcrossings, instead of both.

As indicated above, in some applications wavecore processing can be performed without additionally performing crosslation processing.

In the above embodiments a sampling operation is performed with a certain delay between the sampled signal and the sampling signal and the samples are combined to derive a value. By repeating the sampling operation with different delays between the sampling signal and the sampled signal more values are derived, the derived values collectively forming the wavecore function. Although in most applications it will be desirable to repeat the sampling operation in this way, it is not always essential. For example, some applications may require only a single value, this value then being monitored, for example for feedback purposes.

In order to perform wavecore processing, two versions of a signal are required; as discussed above, one version can be derived from the other version, or both can be derived from a signal under examination. If one version is derived from the other version, the derived version can be used as the sampling signal or as the sampled signal. Furthermore, if crosslation processing is also performed, either version can be sampled to obtain the crosslation function. In wavecore and/or crosslation processing, it is possible to repeat the processing operation with the sampling and sampled signal versions interchanged. However, in such arrangements, proper care must be taken in order to avoid reversing the polarity of a resulting wavecore function.

Although most of the above-described wavecore processors use signal versions which are simply copies of each other except for a phase shift of the frequency components in one signal relative to those in the other signal, this is not essential. For example, the version derived by the Hilbert transformer of Fig. 13b would not necessarily have the same amplitude profile as the source version of the signal; however, this is unimportant if the zero-crossings occur at the same times as a correspondingly phase-shifted true copy of the source signal. As a further example, one of the versions may have been subjected to processing in a transmission channel, so that the resulting representation will contain useful information about the channel characteristics.

The sequence in which various steps are performed may be varied considerably. For example, the above embodiments have a 'parallel' configuration in which samples relating to different time shifts are taken simultaneously; it would be possible instead to have a 'serial' configuration whereby the chains of delay units are replaced by a single variable delay, the samples corresponding to different delays being obtained in a sequential manner by varying the delay.

The signals mentioned above have an amplitude which varies with respect to time, but the invention is also applicable to analysis of signals which vary according to any appropriate independent variable, such as relative time, distance, spatial location, angular position etc.

**Claims**

1. A method of processing a first signal, the method comprising the steps of:

(a) deriving a second signal which is a version of the first signal, the second signal having one or more frequency components each being shifted in phase with respect to a corresponding component of the first signal by the same predetermined phase amount $\theta$, where $\theta$ MOD 180° <> 0;
(b) using zero-crossings of one of the first and second signals to determine sampling instants at which the other of the first and second signals is sampled;
(c) combining the samples to obtain a combined value.

**2.** A method of deriving a representation of a first signal, the method comprising processing the first signal by a method as claimed in claim 1; and

(d) repeating steps (b) and (c) with different time-shifts between the first and second signals, whereby the combined values for the different time-shifts collectively form a representation of the first signal.

**3.** A method as claimed in claim 1 or claim 2, wherein the predetermined phase amount is 90°.

**4.** A method as claimed in any preceding claim, wherein the second signal is derived from the first signal.

**5.** A method as claimed in claim 4, wherein the second signal is derived by applying a Hilbert transformation to the first signal.

**6.** A method as claimed in claim 5, wherein the Hilbert transformation is obtained by obtaining a weighted sum of differently time-shifted versions of the first signal.

**7.** A method as claimed in any one of claims 1 to 3, wherein the first and second signals are both derived from an input signal.

**8.** A method as claimed in claim 7, wherein the first and second signals are derived by mixing the input signal with respective local oscillator signals, the local oscillator signals being shifted in phase with respect to each other.

**9.** A method as claimed in claim 2 or any claim directly or indirectly dependent on claim 2, wherein said representation is a first representation, the method further including the step of forming a second representation by the steps of:

(i) deriving first and second versions of one of the first and second signals;
(ii) using zero-crossings of one of the first and second versions to determine sampling instants at which the other of the first and second versions is sampled;
(iii) combining the samples obtained in step (ii) to obtain a combined value; and
(iv) repeating steps (ii) and (iii) with different time-shifts between the first and second versions, whereby the combined values obtained in step (iii) for the different time-shifts collectively form the second representation of the first signal.

**10.** A method as claimed in claim 9, including the step of deriving parameters representing the complex function

$$A(\tau) + jB(\tau)$$

where $\tau$ represents time shift, $A(\tau)$ is one of the representations, $B(\tau)$ is the other of the representations and $j^2 = -1$.

**11.** A method as claimed in claim 10, wherein one of the parameters is determined by the ratio $A(\tau)/B(\tau)$ and the signs of $A(\tau)$ and $B(\tau)$.

**12.** A method as claimed in claim 10 or claim 11, wherein one of the parameters is determined by the value $\sqrt{[A^2(\tau) + B^2(\tau)]}$.

**13.** A method as claimed in claim 9, including the step of using zero-crossings of one of the representations to sample the other representation, the samples forming another representation of the first signal.

**14.** A method as claimed in claim 13, wherein the sample of the other representation is determined by interpolation using values of the function $\sqrt{[A^2(\tau) + B^2(\tau)]}$ (where $\tau$ represents time shift, $A(\tau)$ is one of the representations, and $B(\tau)$ is the other of the representations) at the times of the zero-crossings of said one of the representations.

**15.** A method as claimed in claim 13 or claim 14, including the step of using zero-crossings of the other of the representations to sample said one representation, the samples forming a further representation of the first signal.

**16.** Apparatus for deriving a representation of a first signal, the apparatus being arranged to operate as set out in claim 2 or any claim directly or indirectly dependent on claim 2.

FIG. 1

FIG. 2

*a)*

$\{s_l(\tau)\}$

$\tau$

*b)*

$C(\tau)$

$\tau$

FIG. 3

FIG. 4

FIG. 5

a)

b)

FIG. 6

FIG. 7

FIG. 8

FIG. 9

FIG. 10

**FIG. 11**

FIG. 12

a)

b)

FIG. 13

FIG. 14

FIG. 15

**FIG. 16**

Fig. 17

Europäisches
Patentamt

European
Patent Office

Office européen
des brevets

# EUROPEAN SEARCH REPORT

Application Number

EP 09 25 0473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 6 539 320 B1 (SZAJNOWSKI WIESLAW JERZY [GB] ET AL) 25 March 2003 (2003-03-25) <br> * column 2, line 23 - line 45 * <br> * column 4, line 35 - column 5, line 65 * <br> * column 7, line 36 - line 42 * <br> * column 10, line 5 - line 15 * <br> ----- | 1-16 | INV. <br> G06F17/15 |
| A | CABOT R C: "A note on the application of the Hilbert transform to time delay estimation" <br> IEEE TRANSACTIONS ON ACOUSTICS, SPEECH AND SIGNAL PROCESSING USA, <br> vol. 29, no. 3, June 1981 (1981-06), pages 607-609, XP007910107 <br> ISSN: 0096-3518 <br> * abstract * <br> * figures 1,3,4 * <br> sections "theory", "implementation" <br> ----- | 1,3,5 | |
| A | AUDOIN B ET AL: "An innovative application of the Hilbert transform to time delay estimation of overlapped ultrasonic echoes" <br> ULTRASONICS, IPC SCIENCE AND TECHNOLOGY PRESS LTD. GUILDFORD, GB, <br> vol. 34, no. 1, 1 March 1996 (1996-03-01), pages 25-33, XP004035540 <br> ISSN: 0041-624X <br> p. 26, section 2 <br> ----- | 1,3,5 | TECHNICAL FIELDS SEARCHED (IPC) <br><br> G06F <br> G01H |
| A | US 2 253 975 A (GUSTAV GUANELLS) 26 August 1941 (1941-08-26) <br> * page 1 - page 2; figures 1,2 * <br> ----- | 1,3,5 | |

-/--

The present search report has been drawn up for all claims

| Place of search | Date of completion of the search | Examiner |
|---|---|---|
| Berlin | 20 November 2009 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 221 732 A1

**Europäisches Patentamt**
**European Patent Office**
**Office européen des brevets**

## EUROPEAN SEARCH REPORT

**Application Number**

EP 09 25 0473

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HERTZ D ET AL: "Time delay estimation between two phase shifted signals via generalized cross-correlation methods" SIGNAL PROCESSING, ELSEVIER SCIENCE PUBLISHERS B.V. AMSTERDAM, NL, vol. 8, no. 2, 1 April 1985 (1985-04-01), pages 235-257, XP024231401 ISSN: 0165-1684 [retrieved on 1985-04-01] * page 247 * | 10 | |
| D,A | EP 1 378 854 A (MITSUBISHI ELECTRIC INF TECH [GB] MITSUBISHI ELECTRIC INF TECH [GB]; M) 7 January 2004 (2004-01-07) * abstract * * paragraphs [0004], [0069], [0070] * | 1-16 | |
| A | EP 1 496 410 A (MITSUBISHI ELECTRIC INF TECH [GB]; MITSUBISHI ELECTRIC CORP [JP]) 12 January 2005 (2005-01-12) * paragraphs [0020], [0024], [0035] * | 1-16 | |
| | | | **TECHNICAL FIELDS SEARCHED (IPC)** |

The present search report has been drawn up for all claims

| Place of search | Date of completion of the search | Examiner |
|---|---|---|
| Berlin | 20 November 2009 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

31

EP 2 221 732 A1

## ANNEX TO THE EUROPEAN SEARCH REPORT
## ON EUROPEAN PATENT APPLICATION NO.

EP 09 25 0473

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2009

| Patent document cited in search report | | Publication date | Patent family member(s) | | Publication date |
|---|---|---|---|---|---|
| US 6539320 | B1 | 25-03-2003 | AT | 346328 T | 15-12-2006 |
| | | | AU | 1882400 A | 31-07-2000 |
| | | | DE | 69934142 T2 | 20-09-2007 |
| | | | EP | 1145084 A1 | 17-10-2001 |
| | | | ES | 2277457 T3 | 01-07-2007 |
| | | | WO | 0039643 A1 | 06-07-2000 |
| | | | GB | 2345149 A | 28-06-2000 |
| | | | JP | 3706305 B2 | 12-10-2005 |
| | | | JP | 2002533732 T | 08-10-2002 |
| | | | JP | 2005249800 A | 15-09-2005 |
| US 2253975 | A | 26-08-1941 | CH | 220877 A | 30-04-1942 |
| | | | FR | 958724 A | 17-03-1950 |
| | | | FR | 1052908 A | 28-01-1954 |
| | | | GB | 724555 A | 23-02-1955 |
| | | | GB | 650114 A | 14-02-1951 |
| EP 1378854 | A | 07-01-2004 | CN | 1495414 A | 12-05-2004 |
| | | | DE | 60224263 T2 | 11-12-2008 |
| | | | JP | 2004163889 A | 10-06-2004 |
| | | | US | 2004059517 A1 | 25-03-2004 |
| EP 1496410 | A | 12-01-2005 | CN | 1591244 A | 09-03-2005 |
| | | | DE | 60313598 T2 | 17-01-2008 |
| | | | EP | 1788459 A1 | 23-05-2007 |
| | | | JP | 2005031083 A | 03-02-2005 |
| | | | US | 2005033537 A1 | 10-02-2005 |

EPO FORM P0459

For more details about this annex : see Official Journal of the European Patent Office, No. 12/82

**EP 2 221 732 A1**

## REFERENCES CITED IN THE DESCRIPTION

**Patent documents cited in the description**

- US 6539320 B
- EP 1378854 A